# EUROPÄISCHE PATENTANMELDUNG

(11) **EP 3 816 632 A1**
(43) Veröffentlichungstag der Anmeldung: **05.05.2021**
(21) Anmeldenummer: 19206854.2
(22) Anmeldetag: 04.11.2019
(51) Int. Cl.: G01N 35/10, B25J 9/16

(54) **TRANSFERSYSTEM FÜR EIN AUTOMATISCHES ANALYSEGERÄT**

(71) Anmelder: Siemens Healthcare Diagnostics Products GmbH, 35041 Marburg (DE)
(72) Erfinder: Wiedekind-Klein, Alexander, 56812 Cochem (DE)

(57) **Zusammenfassung**

Die vorliegende Erfindung liegt auf dem Gebiet der automatischen Analysegeräte und betrifft ein Transfersystem (1) für ein automatisches Analysegerät, das Transfersystem (1) umfassend einen Transferarm (2), wobei der Transferarm (2) ein bewegbares Element umfasst, wobei das bewegbare Element einen Beschleunigungssensor (4) umfasst, der eine Beschleunigung des bewegbaren Elements in einer Raumrichtung (X), bevorzugt in zwei (X, Z), besonders bevorzugt in drei Raumrichtungen (X, Y, Z) erfassen kann.

## Beschreibung

Die Erfindung liegt auf dem Gebiet der automatischen Analysegeräte und betrifft ein Transfersystem für ein automatisches Analysegerät, umfassend einen Transferarm mit einem bewegbaren Element und einem Beschleunigungssensor zum Erfassen einer Beschleunigung des bewegbaren Elements.

Zahlreiche Nachweis- und Analyseverfahren zur Bestimmung physiologischer Parameter in Körperflüssigkeitsproben oder anderer Parameter in anderen biologischen Proben werden heute automatisiert in großer Anzahl in entsprechenden automatischen Analysegeräten durchgeführt. Im Bereich der Labordiagnostik werden die zu analysierenden Körperflüssigkeitsproben, wie Blut, Plasma, Serum oder Urin, in verschlossenen Probengefäßen zur Verfügung gestellt. Die Probengefäße werden dem Analysegerät einzeln oder gruppenweise in geeigneten Gestellen angeordnet zugeführt. Üblicherweise werden die Probengefäße mittels eines Transportsystems zunächst an einer Identifikationseinrichtung vorbeigeführt, die Informationen zur Identität der Probe, die auf dem Probengefäß angebracht sind, z.B. in Form eines Barcodes, liest und an eine Speichereinheit weiterleitet. Sodann wird jedem Probengefäß ein Aliquot der Probenflüssigkeit entnommen und in ein Reaktionsgefäß transferiert, in welchem dann das analytische Testverfahren durchgeführt wird.

Um eine Vielzahl von Untersuchungen automatisiert durchführen zu können, ist es an einer Vielzahl von Stellen erforderlich, durch automatisiertes Pipettieren kleine Flüssigkeitsmengen aus den entsprechenden Behältnissen zu entnehmen. So müssen beispielsweise Aliquots der Probe aus den Probengefäßen oder genau vorgegebene Teilmengen von Reagenzien aus den Reagenzbehältern entnommen und in das für die jeweilige Untersuchung bestimmte Reaktionsgefäß transferiert werden. Hierfür sind je nach Einsatzzweck mehrere entsprechende Pipettiersysteme in einem automatischen Analysegerät vorgesehen. Weiter werden eine Vielzahl von Probengefäßen mittels Transferarmen innerhalb des automatischen Analyzer, z.B. zwischen verschiedenen Aufnahmepositionen, transferiert. Dabei werden meist Transferarme eingesetzt, um die jeweiligen Bewegungen auszuführen und so z.B. die Pipettiernadel oder ein kleines Transportgefäß wie etwa eine Küvette zu transportieren.

An solche Transferarme werden verschiedene Anforderungen gestellt. Zur Erhöhung von Durchsatz ist es z.B. vorteilhaft, wenn die Transferarme sich schnell bewegen können. Weiter dürfen die Transferarme jedoch das Probenmaterial und/oder das Reagenzmaterial nicht verlieren oder beschädigen. Zu Beschädigungen kann es z.B. durch Schütteln kommen. Außerdem müssen die Transferarme Bewegungen sehr zuverlässig und wenig fehleranfällig ausführen. Eine weitere sehr wichtige Eigenschaft geeigneter Transferarme ist es, dass diese bei unbeabsichtigten Kollisionen mit anderen Geräteteilen oder einem Menschen, etwa einen den Analyzer bedienenden Labormitarbeiter oder einen Servicemitarbeiter, sofort anhalten, um Verletzungen zu vermeiden oder deren Schwere wenigstens zu minimieren. Da in den Analyzern häufig hoch infektiöse Materialien prozessiert werden, besteht bei Unfällen mit auch nur kleineren Verletzungen dennoch eine besonders hohe Gefahr für die verletzte Person, schwerste Gesundheitsschäden, z.B. durch eine Infektion mit humanen Immundefizienz-Viren (HIV) oder anderen gefährlichen Krankheitserregern zu erleiden. Daher ist es von besonderer Wichtigkeit, dass eine unbeabsichtigte Kollision durch entsprechende Vorrichtungen jederzeit zuverlässig und rasch erkannt wird.

Bekannte Lösungen haben den Nachteil, dass das Geschwindigkeitspotential der Mechanik und der Antriebe der Transferarme aus Sicherheitsgründen meist nicht voll genutzt werden kann. Weiter ist die Erkennung von unbeabsichtigten Kollisionen meist beschränkt auf bestimmte Bewegungsrichtungen, für die entsprechende Vorrichtungen zur Erkennung von unbeabsichtigten Kollisionen konstruiert wurden.

Für die Erkennung von unbeabsichtigten Kollisionen kommen derzeit verschiedene Vorrichtungen zum Einsatz wie z.B. mechanische Schalter, Kontakte oder Hall-Sensoren, die alle letztlich mechanische Auslenkungen detektieren. Daher kann eine Kollision prinzipiell nur dann erkannt werden, wenn sie in Richtung einer erwarteten mechanischen Auslenkung geschieht. Häufig wird z.B. eine Detektion für senkrechte Bewegungen parallel zur Wirkrichtung der Gravitation (Z-Richtung) vorgesehen, da häufig in Analyzern die Gefahr besteht, dass z.B. Öffnungen von Probengefäßen nicht richtig getroffen werden oder z.B. Gefäße versehentlich mit einer Kappe verschlossen sind, die eigentlich hätte entfernt werden müssen. Solche Vorrichtungen können typischerweise keine Kollisionen in den horizontalen X- oder Y-Richtungen erkennen. Solche Kollisionen können jedoch in der Praxis vorkommen, z.B. wenn eine Person mit einer Hand in den Analyzer gerät. Entsprechendes gilt z.B. auch für Rotationsbewegungen an Dreh- und/oder Hubarmen. Der Einbau von weiteren mechanischen Bewegungsachsen mit bekannten Vorrichtungen zur Erkennung von Kollisionen bringt z.B. Nachteile in Form von erhöhtem Aufwand, höherem Gewicht, verringerter Stabilität und höherer Kosten mit sich.

Bezüglich der Überwachung der Bewegung von Transferamen werden verschiedene Ansätze unterschieden. Die Zuverlässigkeit der Bewegung wird bisher meist durch eine Überwachung der Rotation des Antriebsmotors durchgeführt. Erfolgt dabei die Rotation nicht wie erwartet, tritt ein Positionsfehler auf. Dieser kann auf einen Defekt der Ansteuerung oder Blockade der Mechanik zurückzuführen sein. Nicht erkannt werden bisher Fehler in der Kopplung zwischen Antrieb und bewegten Teilen, z.B. Riemen oder Zahnrädern, da diese nicht zu Positionsfehlern des Motors führen. Soweit solche Fehler überwacht werden sollen, werden bisher zusätzliche Weggeber an den bewegten Teilen vorgesehen. Bei einem Positionsfehler kann es sich z.B. um einen Schrittfehler bei Schrittmotoren, oder um den Schlupf bei Gleichstrom und Asynchronmotoren handeln.

Bisher werden die Art der Bewegung der Transferarme durch Rampen, die Beschleunigung, Verfahren und Abbremsen beschreiben während der Entwicklungsphase der Analyzer definiert und sind dann entsprechend für den Betrieb des Analyzers fest vorgegeben. Hierbei müssen Parameter berücksichtigt werden, die später jederzeit einen sicheren und zuverlässigen Betrieb gewährleisten. Dazu sind typischerweise die maximale Geschwindigkeit der Antriebe und der Mechanik zu beachten sowie die maximale zulässigen Beschleunigungen z.B. für die transportierten Flüssigkeiten. Dabei müssen weiter jedoch die zu erwartenden Toleranzen in der später vorgesehenen Serienfertigung der Analyzer berücksichtigt werden. Dies führt bisher dazu, dass die tatsächlich verwendeten Werte für z.B. maximale Beschleunigungen signifikant unter den prinzipiell technisch möglichen Werten liegen und z.B. Sicherheitsmargen in der Größenordnung von z.B. bis zu 20 oder 30 Prozent vorgesehen werden müssen. Letztlich führt dies zu einer erheblichen Reduktion des Gerätedurchsatzes und zu verlängerten Durchlaufzeiten für Analysen.

Die Erfindung geht dabei von der Idee aus, einen oder mehrere Beschleunigungssensoren einzusetzen und damit zusammenarbeitende elektronische Komponenten und eine entsprechende Softwaresteuerung. Der Einsatz von Beschleunigungssensoren und entsprechenden Auswertungen durch z.B. ein Steuersystem ermöglicht auch bislang nicht realisierbare, erhöhte Zuverlässigkeit der Bewegung von z.B. Pipettierarmen bei gleichzeitig sehr niedrigen Kosten und insbesondere minimalem mechanischen Aufwand.

Gegenstand der vorliegenden Erfindung ist daher ein Transfersystem für ein automatisches Analysegerät, das Transfersystem umfassend einen Transferarm, wobei der Transferarm ein bewegbares Element umfasst, wobei das bewegbare Element einen Beschleunigungssensor umfasst, der eine Beschleunigung des bewegbaren Elements in einer Raumrichtung, bevorzugt in zwei, besonders bevorzugt in drei Raumrichtungen erfassen kann.

In einer bevorzugten Ausführungsform der Erfindung umfasst das Transfersystem eine Steuervorrichtung zur Steuerung des bewegbaren Elements des Transferarms. Bevorzugt kann das bewegbare Element des Transferarms mittels einem oder mehrerer Motoren, bevorzugt Elektromotoren, bewegt werden. Bevorzugt erfolgt die Steuerung des bewegbaren Elements des Transferarms durch Steuerung des Motors oder der Motoren mittels der Steuervorrichtung. Dies hat den Vorteil, dass die für die Steuerung benötigten elektronischen Bauteile integral in das erfindungsgemäße Transfersystem integriert sind.

Bevorzugt handelt es sich bei dem Elektromotor oder den Elektromotoren um einen Schrittmotor oder mehrere Schrittmotoren, besonders bevorzugt um einen Gleichstrommotor oder mehrere Gleichstrommotoren und/oder um einen Asynchronmotor oder mehrere Asynchronmotoren.

In einer weiteren bevorzugten Ausführungsform der Erfindung umfasst das Transfersystem eine Datenübertragungsvorrichtung, die Daten des Beschleunigungssensors an die Steuervorrichtung übertragen kann. Dies hat den Vorteil, dass eine Übertragung der Daten des Beschleunigungssensors unmittelbar an die Steuervorrichtung erfolgen kann.

In einer weiteren bevorzugten Ausführungsform der Erfindung ist die Steuervorrichtung an dem bewegbaren Element angeordnet. Dies hat den Vorteil, dass sich die Steuervorrichtung direkt in räumlicher Nähe zu dem Beschleunigungssensor befindet und die Daten des Beschleunigungssensors nur kurze Wegstrecken zur Steuervorrichtung zurücklegen müssen. Weiter hat dies den Vorteil, dass keine Datenübertragung zwischen relativ zueinander bewegbaren Teilen erfolgt, sondern sowohl der Sensor als auch die Steuervorrichtung und entsprechende Verbindungen ortsfest auf dem bewegbaren Element angeordnet werden können.

In einer weiteren bevorzugten Ausführungsform der Erfindung umfasst das bewegbare Element eine Halterung für ein Flüssigkeitsgefäß, bevorzugt ein offenes Flüssigkeitsgefäß, zum Transfer eines Flüssigkeitsvolumens und/oder eine Halterung für eine Pipettiernadel zum Transfer eines Flüssigkeitsvolumens.

In einer weiteren bevorzugten Ausführungsform der Erfindung ist das Transfersystem Teil einer automatischen Roboterstation, bevorzugt eines automatischen Analysegeräts.

Ein weiterer Gegenstand der Erfindung ist ein Verfahren zur Erfassung der Beschleunigung eines bewegbaren Elements eines erfindungsgemäßen Transfersystems, das Verfahren umfassend den Schritt
- Erfassung mindestens eines Beschleunigungswertes des bewegbaren Elements in mindestens einer Raumrichtung mittels des Beschleunigungssensors.

In einer bevorzugten Ausführungsform der Erfindung umfasst das Verfahren weiter die Schritte
- Übertragung des erfassten Beschleunigungswertes an die Steuervorrichtung,
- Steuerung des bewegbaren Elements in Abhängigkeit des erfassten Beschleunigungswertes.

Dies hat den Vorteil, dass die Steuerung des bewegbaren Elements abhängig von unmittelbar lokal gemessenen Beschleunigungswerten vorteilhafterweise in Echtzeit oder quasi in Echtzeit erfolgen kann. Dies ermöglicht es, die jeweiligen Beschleunigungen entsprechend einzustellen, zu überwachen und zu optimieren.

In einer bevorzugten Ausführungsform des erfindungsgemäßen Verfahrens erfolgt die Steuerung des bewegbaren Elements in Abhängigkeit des erfassten Beschleunigungswertes und eines vorbestimmten maximalen Beschleunigungswerts, wobei die Beschleunigung des bewegbaren Elements solange erhöht wird, bis der erfasste Beschleunigungswert den vorbestimmten maximalen Beschleunigungswert erreicht und/oder wobei, wenn der vorbestimmte maximale Beschleunigungswert überschritten wird, die Beschleunigung des bewegbaren Elements solange verringert wird, bis der erfasste Beschleunigungswert den vorbestimmten maximalen Beschleunigungswert erreicht oder unterschreitet.

Dies hat den Vorteil, dass die maximal entsprechend der Hardware sicher möglichen Beschleunigungswerte tatsächlich im Betrieb von Transfersystemen erreicht werden können, da z.B. individuelle Toleranzwerte bezüglich der Transfersysteme überhaupt nicht mehr oder aber im erheblich reduziertem Umfang berücksichtigt werden müssen. Dies ermöglicht letztlich u.a. schnellere Transferzeiten und höhere Durchsatzzahlen bei unveränderten Hardwarekomponenten.

In einer bevorzugten Ausführungsform des erfindungsgemäßen Verfahrens umfasst das Verfahren weiter die Schritte
- Vergleich des erfassten Beschleunigungswertes mit einem vorbestimmten Beschleunigungswert,
- Abbruch einer Bewegung des bewegbaren Elements, wenn der erfasste Beschleunigungswert von dem vorbestimmten Beschleunigungswert um mehr als einen vorbestimmten Wert abweicht.

Bei der Abweichung kann es sich vorteilhafterweise um eine Unterschreitung oder eine Überschreitung des vorbestimmten Beschleunigungswerts handeln.

Dies hat den Vorteil, dass die Sicherheit des Transfersystems erheblich erhöht werden kann. Insbesondere bei z.B. ungewollten Kollisionen des bewegbaren Elements und einer dadurch verursachten Überschreitung des vorbestimmten Beschleunigungswerts kann dessen Bewegung sofort abgebrochen werden. Dies ermöglicht es, z.B. Verletzungen zu vermeiden und/oder deren Schwere zu reduzieren und eine Erhöhung der Betriebssicherheit zu erreichen. Weiter ermöglicht dies, Abnutzungen und/oder Zerstörrungen durch z.B. hohe mechanische Belastungen von z.B. Bauteilen des Transfersystems zu vermeiden. Dies führt auch zu einer verlängerten Lebenszeit der Transfersysteme und einer höheren Verfügbarkeit aufgrund reduzierter Ausfallzeiten.

In einer bevorzugten Ausführungsform des erfindungsgemäßen Verfahrens wird, wenn der erfasste Beschleunigungswert den vorbestimmten Beschleunigungswert um mehr als den vorbestimmten Wert überschreitet, ein Hinweis auf eine Kollision und/oder Blockierung des Transferarms von einem Ausgabegerät ausgegeben.

Dies hat den Vorteil, dass eine Mitteilung an das Bedienpersonal ausgegeben wird, aus der sich entsprechende Hinweise zu Störungsursachen und/oder deren Behebung ableiten lassen. Dies ermöglicht schnelleres Auffinden und Beheben von Fehlern.

In einer bevorzugten Ausführungsform des erfindungsgemäßen Verfahrens wird, wenn der erfasste Beschleunigungswert den vorbestimmten Beschleunigungswert um mehr als den vorbestimmten Wert unterschreitet, ein Hinweis auf einen mechanischen Defekt des Transferarms von einem Ausgabegerät ausgegeben.

In einem solchen Fall ist von einem mechanischem Defekt auszugehen, welcher zwischen einem Antrieb und dem bewegbaren Element aufgetreten ist. Dabei kann es sich z.B. um Defekte an Kopplungen wie etwa Riemen und/oder Zahnrädern handeln. Das erfindungsgemäße Verfahren hat somit den Vorteil, dass eine sehr viel weitergehende Fehlerdetektion möglich ist im Vergleich zu z.B. einem Geber auf einer Motorache, der typischerweise z.B. lediglich Positionsfehler des Motors ermittelt. Dies hat weiter den Vorteil, dass eine Mitteilung an das Bedienpersonal ausgegeben wird, aus der sich entsprechende Hinweise zu Störungsursachen und/oder deren Behebung ableiten lassen. Dies ermöglicht schnelleres Auffinden und Beheben von Fehlern.

In einer bevorzugten Ausführungsform des erfindungsgemäßen Verfahrens erfolgt die Erfassung des Beschleunigungswertes für die eine Raumrichtung oder für die zwei oder drei Raumrichtungen. Bevorzugt erfolgt der Vergleich der jeweils erfassten Beschleunigungswerte mit entsprechend vorbestimmten Beschleunigungswerten. Bevorzugt werden dabei die Beschleunigung in den einzelnen Raumrichtungen jeweils separat erfasst und verglichen.

Dies hat den Vorteil, dass je nach Ausgestaltung die Beschleunigung in einer, zwei oder drei Raumrichtungen erfasst werden kann und die entsprechenden Vorteile des Verfahrens jeweils in dieser bzw. diesen Raumrichtungen realisiert werden können.

In einer bevorzugten Ausführungsform des erfindungsgemäßen Verfahrens erfolgt die Erfassung des Beschleunigungswertes oder der Beschleunigungswerte kontinuierlich oder quasi-kontinuierlich.

Dies hat u.a. den Vorteil, dass die entsprechende Steuerung und Optimierung der Bewegung in Echtzeit oder quasi in Echtzeit erfolgen kann.

Ein weiterer Gegenstand der Erfindung ist die Verwendung eines erfindungsgemäßen Transfersystems und/oder eines erfindungsgemäßen Verfahrens in einem automatischen Analysegerät.

Ein weiterer Gegenstand der Erfindung ist ein automatisches Analysegerät mit einem erfindungsgemäßen Transfersystem.

**Die Erfindung wird anhand von Zeichnungen exemplarisch näher erläutert. Gleiche Elemente sind jeweils mit dem gleichen Bezugszeichen versehen. Darin zeigt**
**Figur 1** **eine schematische Darstellung eines Transfersystems (1) in einem automatischen Analysegerät,**
**Figur 2** **eine schematische Darstellung eines Diagramms (10) der Beschleunigung a (12) gegen die Zeit t (13) eines optimierten Bewegungsvorgangs eines Transferarms (2),**
**Figur 3** **eine schematische Darstellung eines Diagramms (10) der Beschleunigung a (12) gegen die Zeit t (13) eines Bewegungsvorgangs mit einer Kollision des Transferarms (2).**

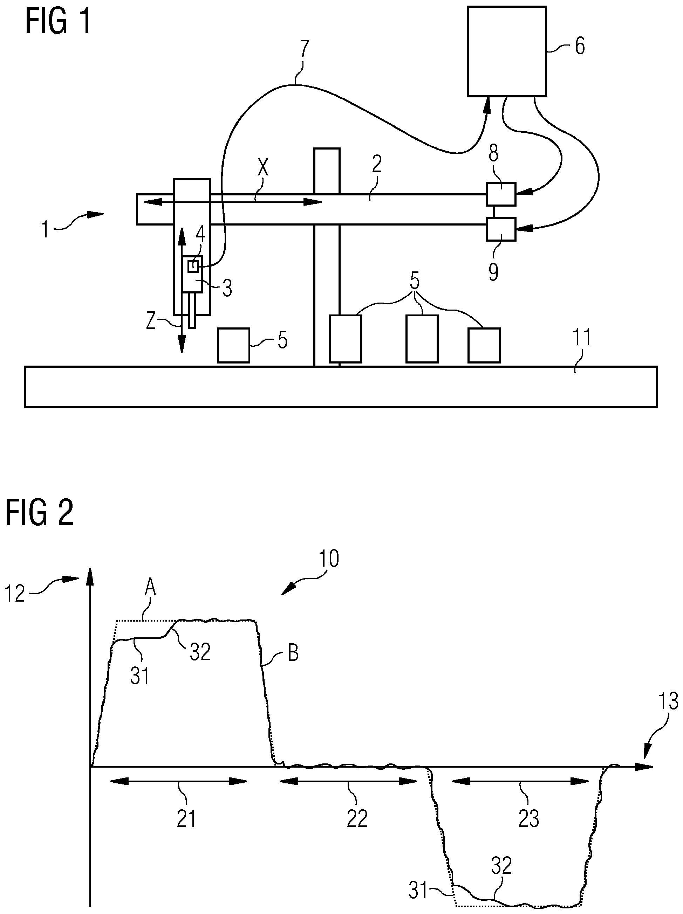

Figur 1 zeigt eine schematische Darstellung eines Transfersystems (1) in einem automatischen Analysegerät.

Das Transfersystem (1) umfasst verschiedene, mit einem Rahmen (11) verbundene Komponenten. Das Transfersystem (1) umfasst einen automatisch verfahrbaren Transferarm (2), der in den jeweils paarweise senkrecht zueinander stehenden Raumrichtungen X, Y (nicht gezeigt) und Z robotisch verfahrbar ist. An dem Transferarm (2) ist ein bewegbares Element, z.B. Pipettor (3) zum Transfer von Flüssigkeiten in dem Analysegerät vorgesehen. Anstelle des Pipettors (3) oder zusätzlich zum Pipettor (3) kann auch ein Transfersystem für Verbrauchsartikel, wie z.B. Küvetten oder Pipettenspitzen vorgesehen sein. Der Pipettor (3) ist zur Aufnahme und Abgabe der Flüssigkeit ausgestaltet. An dem Transferarm (2), bevorzugt an dem Pipettor (3), ist ein Beschleunigungssensor (4) vorgesehen, der mit dem Transferarm (2) und/oder dem Pipettor (3) verbunden ist. Alternativ können mehrerer Beschleunigungssensoren (4) vorgesehen sein, bevorzugt jeweils ein Beschleunigungssensor (4) für jede Raumrichtung X, Y und/oder Z. Besonders bevorzugt sind die Beschleunigungssensoren (4) in einer Baueinheit zusammengefasst. Die vier Positionen (5) können mit dem Transferarm (2) angefahren werden. An der jeweiligen Position (5) kann dann automatisch Flüssigkeit und oder ein Verbrauchsartikel aufgenommen und/oder abgegeben werden. Der Beschleunigungssensor (4) ist über eine Kommunikationsstrecke (7) mit einer Steuervorrichtung (6) verbunden. Die Kommunikationsstrecke (7) ist als Datenübertragungsvorrichtung ausgestaltet. Die Steuervorrichtung (6) dient zur Steuerung des ersten (8) und/oder des zweiten Motors (9). Der erste Motor (8) ermöglicht Bewegungen in Raumrichtung X, der zweite Motor (9) in Raumrichtung Z. Der erste (8) und der zweite Motor (9) sind mit dem Transferarm (2) verbunden.

Figur 2 zeigt eine schematische Darstellung eines Diagramms (10) der Beschleunigung a (12) gegen die Zeit t (13) eines optimierten Bewegungsvorgangs eines Transferarms (2).

Dargestellt ist ein erster Verlauf (A) der Beschleunigung, der einem idealem Verlauf (Sollwert) eines Bewegungsvorgangs entspricht. Der Bewegungsvorgang gliedert sich in eine Beschleunigungsphase (21), eine gleichförmige Bewegungsphase (22) und eine Abbremsphase (23). Während der Beschleunigungsphase (21) ist der Wert der Beschleunigung a positiv, während der gleichförmige Bewegungsphase (22) ist der Wert der Beschleunigung a null, während der Abbremsphase (23) ist der Wert der Beschleunigung a negativ.

Dargestellt ist weiter ein zweiter Verlauf (B) der Beschleunigung, der einem realem Verlauf (Istwert) eines Bewegungsvorgangs entspricht. Der Bewegungsvorgang gliedert sich ebenfalls in eine Beschleunigungsphase (21), eine gleichförmige Bewegungsphase (22) und eine Abbremsphase (23). Während der Beschleunigungsphase (21) ist der Wert der Beschleunigung a positiv, während der gleichförmige Bewegungsphase (22) ist der Wert der Beschleunigung a null, während der Abbremsphase (23) ist der Wert der Beschleunigung a negativ. Bei der Beschleunigungsphase (21) und der Abbremsphase (23) kommt es jeweils teilweise zu einer zu geringen Beschleunigung und der Sollwert wird unterschritten (31). Mittels der Steuervorrichtung (6) erfolgt eine Korrektur (32) der Beschleunigung und der Istwert wird an den Sollwert entsprechend herangeführt.

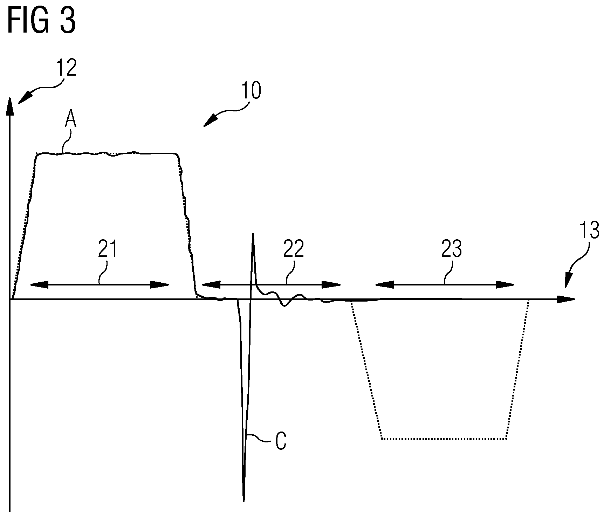

Figur 3 zeigt eine schematische Darstellung eines Diagramms (10) der Beschleunigung a (12) gegen die Zeit t (13) eines Bewegungsvorgangs mit einer Kollision des Transferarms (2).

Dargestellt ist ein erster Verlauf (A) der Beschleunigung, der einem idealem Verlauf (Sollwert) eines Bewegungsvorgangs entspricht. Der Bewegungsvorgang gliedert sich in eine Beschleunigungsphase (21), eine gleichförmige Bewegungsphase (22) und eine Abbremsphase (23). Während der Beschleunigungsphase (21) ist der Wert der Beschleunigung a positiv, während der gleichförmige Bewegungsphase (22) ist der Wert der Beschleunigung a null, während der Abbremsphase (23) ist der Wert der Beschleunigung a negativ.

Dargestellt ist weiter ein dritter Verlauf (C) der Beschleunigung, der einem realem Verlauf (Istwert) eines Bewegungsvorgangs entspricht, bei dem es in der gleichförmige Bewegungsphase (22) zu einer Kollision des Transferarms (2) kommt. Der Transferarms (2) wird stark abgebremst und die Beschleunigung nimmt plötzlich stark negative Werte an. Der Istwert der Beschleunigung weicht mehr als ein vorbestimmter Wert vom Sollwert ab. Die Steuervorrichtung (6) bricht daraufhin die Bewegung des Transferarms (2) schnellstmöglich ab.

### BEZUGSZEICHENLISTE

- 1: Transfersystem
- 2: Transferarm
- 3: Pipettor
- 4: Beschleunigungssensor
- 5: Position
- 6: Steuervorrichtung
- 7: Kommunikationsstecke
- 8: erster Motor
- 9: zweiter Motor
- 10: Diagramm
- 11: Rahmen
- 12: Beschleunigung a
- 13: Zeit t
- 21: Beschleunigungsphase
- 22: gleichförmige Bewegungsphase
- 23: Abbremsphase
- 31: Unterschreitung
- 32: Korrektur

- A: erster Verlauf
- B: zweiter Verlauf
- C: dritter Verlauf

- X: X-Richtung
- Y: Y-Richtung
- Z: Z-Richtung

## Patentansprüche

1. Transfersystem (1) für ein automatisches Analysegerät, das Transfersystem (1) umfassend einen Transferarm (2), wobei der Transferarm ein bewegbares Element (3) umfasst,
**dadurch gekennzeichnet, dass**
das bewegbare Element einen Beschleunigungssensor (4) umfasst, der eine Beschleunigung des bewegbaren Elements in einer Raumrichtung (X), bevorzugt in zwei (X, Z), besonders bevorzugt in drei Raumrichtungen (X, Y, Z) erfassen kann.

2. Transfersystem (1) nach Anspruch 1, wobei das Transfersystem (1) eine Steuervorrichtung (6) zur Steuerung des bewegbaren Elements des Transferarms umfasst.

3. Transfersystem (1) nach Anspruch 2, wobei das Transfersystem (1) eine Datenübertragungsvorrichtung umfasst, die Daten des Beschleunigungssensors (4) an die Steuervorrichtung (6) übertragen kann.

4. Transfersystem (1) nach einem der Ansprüche 2 oder 3, wobei die Steuervorrichtung (6) an dem bewegbaren Element angeordnet ist.

5. Transfersystem (1) nach einem der vorhergehenden Ansprüche, wobei das bewegbare Element eine Halterung für ein Flüssigkeitsgefäß, bevorzugt ein offenes Flüssigkeitsgefäß, zum Transfer eines Flüssigkeitsvolumens und/oder eine Halterung für eine Pipettiernadel zum Transfer eines Flüssigkeitsvolumens umfasst.

6. Transfersystem (1) nach einem der vorhergehenden Ansprüche, wobei das Transfersystem (2) Teil einer automatischen Roboterstation, bevorzugt eines automatischen Analysegeräts ist.

7. Verfahren zur Erfassung der Beschleunigung (12) eines bewegbaren Elements eines Transfersystems (2) nach einem der Ansprüche 1 bis 6, das Verfahren umfassend den Schritt
- Erfassung mindestens eines Beschleunigungswertes des bewegbaren Elements in mindestens einer Raumrichtung (X, Y, Z) mittels des Beschleunigungssensors (4).

8. Verfahren nach Anspruch 7, das Verfahren umfassend weiter die Schritte
- Übertragung des erfassten Beschleunigungswertes an die Steuervorrichtung (6),
- Steuerung des bewegbaren Elements in Abhängigkeit des erfassten Beschleunigungswertes.

9. Verfahren nach Anspruch 8, wobei die Steuerung des bewegbaren Elements in Abhängigkeit des erfassten Beschleunigungswertes und eines vorbestimmten maximalen Beschleunigungswerts erfolgt, wobei die Beschleunigung des bewegbaren Elements solange erhöht wird, bis der erfasste Beschleunigungswert den vorbestimmten maximalen Beschleunigungswert erreicht und/oder wobei, wenn der vorbestimmte maximale Beschleunigungswert überschritten wird, die Beschleunigung des bewegbaren Elements solange verringert wird, bis der erfasste Beschleunigungswert den vorbestimmten maximalen Beschleunigungswert erreicht oder unterschreitet.

10. Verfahren nach Anspruch 8, das Verfahren umfassend weiter die Schritte
- Vergleich des erfassten Beschleunigungswertes mit einem vorbestimmten Beschleunigungswert,
- Abbruch einer Bewegung des bewegbaren Elements, wenn der erfasste Beschleunigungswert von dem vorbestimmten Beschleunigungswert um mehr als einen vorbestimmten Wert abweicht.

11. Verfahren nach Anspruch 10, wobei, wenn der erfasste Beschleunigungswert den vorbestimmten Beschleunigungswert um mehr als den vorbestimmten Wert überschreitet, ein Hinweis auf eine Kollision und/oder Blockierung des Transferarms von einem Ausgabegerät ausgegeben wird.

12. Verfahren nach Anspruch 10, wobei, wenn der erfasste Beschleunigungswert den vorbestimmten Beschleunigungswert um mehr als den vorbestimmten Wert unterschreitet, ein Hinweis auf einen mechanischen Defekt des Transferarms (2) von einem Ausgabegerät ausgegeben wird.

13. Verfahren nach einem der Ansprüche 7 bis 12, wobei die Erfassung des Beschleunigungswertes für die eine Raumrichtung (X) oder für die zwei (X, Z) oder drei Raumrichtungen (X, Y, Z) erfolgt.

14. Verfahren nach einem der Ansprüche 7 bis 13, wobei die Erfassung des Beschleunigungswertes oder der Beschleunigungswerte kontinuierlich oder quasi-kontinuierlich erfolgt.

15. Verwendung eines Transfersystems (1) nach einem der Ansprüche 1 bis 6 und/oder eines Verfahrens nach einem der Ansprüche 7 bis 14 in einem automatischen Analysegerät.

16. Automatisches Analysegerät mit einem Transfersystem (1) nach einem der Ansprüche 1 bis 6.
